# EUROPÄISCHE PATENTANMELDUNG

(11) **EP 3 029 414 A1**
(43) Veröffentlichungstag der Anmeldung: **08.06.2016**
(21) Anmeldenummer: 14195672.2
(22) Anmeldetag: 01.12.2014
(51) Int. Cl.: G01B 5/20, F01D 5/14, G01B 21/04, B22C 9/10

(54) **Turbinenschaufel, Verfahren zu ihrer Herstellung und Verfahren zum Ermitteln der Lage eines beim Gießen einer Turbinenschaufel verwendeten Gusskerns**

(71) Anmelder: Siemens Aktiengesellschaft, 80333 München (DE)
(72) Erfinder: Gill, Markus, 49479 Ibbenbüren (DE); Menke, Christian, 45329 Essen (DE)

(57) **Zusammenfassung**

Es wird eine Turbinenschaufel (1) mit einer in einem Koordinatensystem definierten Schaufelgeometrie und wenigstens einem nach außen offenen, eine Schaufelinnenfläche (10, 18, 19) aufweisenden Hohlraum (9, 15) zur Verfügung gestellt. In der Schaufelinnenfläche (10, 18, 19) ist wenigstens eine ebene Abtastfläche (33, 35) für den Messkopf (37) einer Koordinatenmesseinrichtung ausgebildet, wobei der wenigstens einen ebenen Abtastfläche (33, 35) eine definierte Soll-Lage und/oder eine definierte Soll-Orientierung in Bezug auf das Koordinatensystem, in dem die Schaufelgeometrie definiert ist, zugeordnet ist.

## Beschreibung

Die vorliegende Erfindung betrifft eine Turbinenschaufel, insbesondere eine Leit- oder Laufschaufel einer Gasturbine, mit wenigstens einem nach außen offenen, eine Schaufelinnenfläche aufweisenden Hohlraum sowie ein Verfahren zum Herstellen einer derartigen Turbinenschaufel. Daneben betrifft die Erfindung ein Verfahren zum Ermitteln der Lage eines beim Gießen einer Turbinenschaufel verwendeten Gusskerns nach dem Gießen der Turbinenschaufel.

Turbinenschaufeln, wie insbesondere Leit- oder Laufschaufeln von Gasturbinen weisen häufig nach außen offene Hohlräume auf. Diese können tief in das Schaufelinnere hineinreichen, wie beispielsweise Hohlräume für das Hindurchleiten von Kühlluft durch die Turbinenschaufel, oder nur wenig in das Schaufelinnere hineinreichen, wie beispielsweise die Vertiefung einer an der Schaufelspitze ausgebildeten Krone. Derartige Hohlräume werden beim Gießen der Turbinenschaufel mittels Gusskernen offengehalten, die nach dem Erstarren des Materials, aus dem die Turbinenschaufel hergestellt wird, chemisch oder thermisch aus dem Hohlraum durch eine nach außen weisende Öffnung des Hohlraums entfernt werden. Die genaue Positionierung der Gusskerne während des Gießprozesses ist dabei von großer Bedeutung für die Wanddicken der Turbinenschaufel und, im Falle einer Krone, für die Lage des Kronenbodens in der Spitze der Turbinenschaufel.

Im Verlauf einer Serienfertigung von Turbinenschaufeln kann es zu Abweichungen in der Lage und oder der Orientierung des Gusskerns bzw. der Gusskerne, insbesondere der radialen Lage des Gusskerns bzw. der Gusskerne, kommen, welche sich erst später beim Wiederaufarbeiten von verschlissenen Turbinenschaufeln bemerkbar machen. Während eines Wiederaufbereitungsprozesses für eine Turbinenschaufel werden in der Regel Beschichtungen chemisch entfernt, wobei auch eine, wenn auch kleine Wandschicht entfernt wird. Wenn nun während des Gießprozesses ein Gusskern nicht in seiner optimalen Lage war, führt dies dazu, dass in manchen Bereichen der Turbinenschaufel die Wandstärke geringer als die optimale Wandstärke ist. Dadurch wird die Zahl der möglichen Wiederaufbereitungsprozesse für die Gasturbinenschaufel verringert, was die maximale Lebensdauer von Turbinenschaufeln verringert und somit die Kosten einer Gasturbinenanlage erhöht. Außerdem beeinflusst die Wandstärke auch Wärmeübergangszonen einer Turbinenschaufel.

Im Rahmen von Qualifizierungsprozessen werden Turbinenbauteile daher einmalig hinsichtlich der radialen Lage des Gusskerns geprüft. Aufgrund der zerstörenden Prüfung ist eine weitere Verwendung der geprüften Turbinenschaufeln jedoch nicht möglich. Die Häufigkeit mit der eine derartige Qualitätsprüfung durchgeführt werden kann, ist daher begrenzt.

Es ist eine erste Aufgabe der vorliegenden Erfindung, ein Verfahren zum Herstellen einer Turbinenschaufel zur Verfügung zu stellen, welches es ermöglicht, die Lage, insbesondere die radiale Lage, eines oder mehrerer Gusskerne in einer Turbinenschaufel nach ihrer Herstellung zerstörungsfrei zu ermitteln.

Es ist eine zweite Aufgabe der vorliegenden Erfindung, ein vorteilhaftes Verfahren zum Ermitteln der Lage eines beim Gießen einer Turbinenschaufel verwendeten Gusskerns an der fertiggestellten Turbinenschaufel zur Verfügung zu stellen.

Eine dritte Aufgabe der vorliegenden Erfindung ist es, eine Turbinenschaufel mit einem nach außen offenen, eine Schaufelinnenfläche aufweisenden Hohlraum zur Verfügung zu stellen, die es ermöglicht, die Lage eines beim Herstellen der Turbinenschaufel verwendeten Gusskerns zu messen.

Die erste Aufgabe wird durch ein Verfahren zum Herstellen einer Turbinenschaufel nach Anspruch 1 gelöst, die zweite Aufgabe durch ein Verfahren zum Ermitteln der Lage eines beim Gießen einer Turbinenschaufel verwendeten Gusskerns nach Anspruch 6 und die dritte Aufgabe durch eine Turbinenschaufel nach Anspruch 7. Die abhängigen Ansprüche enthalten vorteilhafte Ausgestaltungen der Erfindung.

Im erfindungsgemäßen Verfahren zum Herstellen von Turbinenschaufeln mit einer in einem Koordinatensystem definierten Schaufelgeometrie und wenigstens einem nach außen offenen, eine Schaufelinnenfläche aufweisenden Hohlraum werden die Schaufeln gegossen, wobei der wenigstens eine nach außen offene Hohlraum mittels wenigstens eines Gusskerns geformt wird, der eine die Schaufelinnenfläche formende Gusskernaußenfläche aufweist und der nach dem Gießprozess aus dem Hohlraum entfernt wird. Die Gusskernaußenfläche weist dabei wenigstens eine ebene Referenzfläche mit definierter Soll-Lage und definierter Soll-Orientierung in Bezug auf ein Koordinatensystem, in dem die Schaufelgeometrie definiert ist, auf. Die wenigstens eine ebene Referenzfläche in der Gusskernaußenfläche formt in der Schaufelinnenfläche wenigstens eine ebene Abtastfläche für eine Koordinatenmesseinrichtung. Dadurch, dass die Abtastfläche eine ebene Fläche ist, kann durch Abtasten wenigstens dreier Punkte der Abtastfläche nicht nur die Lage der ebenen Abtastfläche erfasst werden, sondern auch die Orientierung der Abtastfläche.

Anhand der definierten Abtastfläche, deren Soll-Lage und Soll-Orientierung im Koordinatensystem, in dem die Schaufelgeometrie definiert ist, bekannt sind, kann mit Hilfe einer Koordinatenmesseinrichtung die Lage und/oder die Orientierung des Gusskerns beim Gießen der Turbinenschaufel nach Fertigstellung der Turbinenschaufel ohne Zerstörung derselben mit hoher Genauigkeit mit Bezug auf die Schaufelgeometrie ermittelt werden. Auf diese Weise ist eine häufige Überprüfung der Kernlage im Verlauf der fortschreitenden Serienfertigung möglich, ohne dass hierfür gefertigte Turbinenschaufeln zerstört werden müssten. Die Kontrolle der Kernlage bei der Fertigung der Turbinenschaufelserie kann daher sehr häufig erfolgen, so dass Abweichungen in der radialen Kernlage von der Soll-Lage oder der Soll-Orientierung frühzeitig entdeckt und korrigiert werden können. Auf diese Weise können die Wanddicken von Turbinenschaufeln während des gesamten Fertigungsprozesses sehr gut im optimalen Bereich gehalten werden, so dass eine hohe Zahl an möglichen Wiederaufbereitungen für die ganze Serie der Turbinenschaufeln gewährleistet werden kann. Darüber hinaus führt das Einhalten der optimierten Wanddicken dazu, dass auch thermodynamische Wärmeübergangszonen in den Turbinenschaufeln einer Serie sehr gut reproduzierbar optimiert werden können. Beides wirkt sich positiv auf die Lebensdauer der Turbinenschaufeln aus, da eine hohe Zahl von Wiederaufbereitungen gewährleistet werden kann und Hot Spots im Betrieb der Turbinenschaufeln zuverlässig vermieden werden können.

Der nach außen offene Hohlraum der mit dem erfindungsgemäßen Verfahren herzustellenden Turbinenschaufel kann wenigstens eine Öffnung in einer Außenfläche der Turbinenschaufel aufweisen. In einer vorteilhaften Ausgestaltung des Verfahrens weist der wenigstens eine Gusskern daher einen die wenigstens eine Öffnung formenden Gusskernabschnitt auf, und die wenigstens eine ebene Referenzfläche ist derart im oder in der Nähe des die Öffnung formenden Gusskernabschnitts gebildet, dass die durch die ebene Referenzfläche in der Schaufelinnenfläche gebildete ebene Abtastfläche von Außerhalb der Turbinenschaufel für einen Messkopf einer Koordinatenmesseinrichtung leicht zugänglich ist. Durch die wenigstens eine Öffnung der Turbinenschaufel nach außen wird typischerweise auch das Gusskernmaterial beim thermischen oder chemischen Entfernen des Gusskerns aus dem Hohlraum der Turbinenschaufel abgeführt. Derartige Öffnungen sind in der Regel von außen leicht zugänglich, so dass dann auch die in diesem Bereich gebildeten Abtastflächen von außen ebenfalls leicht zugänglich sind. Im erfindungsgemäßen Verfahren kann der wenigstens eine Gusskern insbesondere eine ebene Referenzfläche mit einer in der Radialrichtung der herzustellenden Turbinenschaufel oder einer entgegen der Radialrichtung der herzustellenden Turbinenschaufel verlaufenden Flächennormalen aufweisen. Zusätzlich oder alternativ kann der wenigstens eine Gusskern eine ebene Referenzfläche mit einer in der Axialrichtung der herzustellenden Turbinenschaufel oder entgegen der Axialrichtung der herzustellenden Turbinenschaufel verlaufenden Flächennormalen aufweisen. Weiter zusätzlich oder alternativ kann der wenigstens eine Gusskern eine ebene Referenzfläche mit einer in der Umfangsrichtung der herzustellenden Turbinenschaufel oder entgegen der Umfangsrichtung der herzustellenden Turbinenschaufel verlaufenden Flächennormalen aufweisen. Beispielsweise kann ein Gusskern zum Formen eines entgegen der Radialrichtung der herzustellenden Turbinenschaufel offenen Hohlraums dienen. In diesem Fall bietet es sich an, wenn der Gusskern wenigstens eine ebene Referenzfläche mit einer in der Radialrichtung der herzustellenden Turbinenschaufel verlaufenden Flächennormalen aufweist, so dass die mit Hilfe der Referenzfläche geformte Abtastfläche eine entgegen der Radialrichtung verlaufende Flächennormale aufweist. Derartige, in der Radialrichtung der herzustellenden Turbinenschaufel offene Hohlräume sind beispielsweise Hohlräume für Kühlluft zum Kühlen von Laufschaufeln von Gasturbinenanlagen, welche Öffnungen zur Zufuhr der Kühlluft im Schaufelfuß aufweisen. Durch die Öffnung kann dann der Messkopf einer Koordinatenmesseinrichtung die Abtastfläche erreichen. Aber auch Leitschaufeln von Gasturbinenanlagen weisen an ihren beiden radialen Enden typischerweise Öffnungen für die Zu- und Abfuhr von Kühlluft auf, so dass auch der Hohlraum einer Leitschaufel häufig entgegen der Radialrichtung offen ist. In einem anderen Beispiel dient ein Gusskern zum Formen eines in der Radialrichtung der herzustellenden Turbinenschaufel offenen Hohlraums, und der Gusskern weist eine ebene Referenzfläche mit einer entgegen der Radialrichtung der herzustellenden Turbinenschaufel verlaufenden Flächennormalen auf. Die Referenzfläche formt dann eine Abtastfläche, deren Flächennormale in Radialrichtung verläuft. Ein in Radialrichtung offener Hohlraum kann beispielsweise, wie oben bereits erwähnt, Öffnung zur Zu- bzw. Abfuhr von Kühlluft in den radial entgegengesetzten Enden einer Leitschaufel für eine Gasturbine aufweisen. Aber auch Laufschaufeln von Gasturbinen können in Radialrichtung offene Hohlräume aufweisen. Hier ist beispielsweise die Krone einer Laufschaufel zu nennen, in welcher eine Vertiefung in der Schaufelspitze durch in Radialrichtung vorstehende Wände des Schaufelblatts gebildet ist. In beiden Fällen kann die Abtastfläche für den Messkopf einer Koordinatenmesseinrichtung leicht zugänglich angeordnet werden.

Gemäß eines zweiten Aspekts der vorliegenden Erfindung wird ein Verfahren zum Ermitteln der Lage eines beim Gießen einer Turbinenschaufel verwendeten Gusskerns nach dem Gießen der Turbinenschaufel zur Verfügung gestellt. Im Rahmen dieses Verfahrens findet eine Turbinenschaufel Verwendung, die nach dem erfindungsgemäßen Verfahren zum Herstellen von Turbinenschaufeln hergestellt worden ist. In einer solchen Turbinenschaufel wird die wenigstens eine ebene Abtastfläche in der Schaufelinnenfläche mit dem Messkopf einer Koordinatenmessung abgetastet, um die Lage und/oder die Orientierung der wenigstens einen ebenen Abtastfläche zu ermitteln. Aus der ermittelten Lage und/oder Orientierung der wenigstens einen ebenen Abtastfläche wird dann die Lage und/oder Orientierung des beim Gießen der Turbinenschaufel verwendeten Gusskerns ermittelt. Durch das Abtasten der ebenen Abtastfläche mit dem Messkopf der Koordinatenmesseinrichtung können die Lage und/oder die Orientierung in Bezug auf das Koordinatensystem, in dem die Schaufelgeometrie definiert ist, gemessen werden woraus auf die genaue Lage und/oder die genaue Orientierung des Gusskerns in Bezug auf die Schaufelgeometrie ermittelt werden kann bzw. können. Aus der Lage und/oder der Orientierung des Gusskerns beim Gießen der Turbinenschaufel lässt sich wiederum die Wanddicke zwischen der von der Außenfläche des Gusskerns geformten Schaufelinnenfläche und der Schaufelaußenfläche ermitteln. Dies alles ist ohne Zerstörung der Turbinenschaufel, an der die Messung vorgenommen wird, möglich. Es können daher im Rahmen einer Serienfertigung viele Turbinenschaufeln im Hinblick auf die Lage des Gusskerns, insbesondere im Hinblick auf die radiale Lage des Gusskerns, während des Gießens der Turbinenschaufel überprüft werden, so dass das erfindungsgemäße Verfahren ermöglicht, Abweichungen der Lage oder der Orientierung des Gusskerns während des Gießens der Turbinenschaufeln von der Soll-Lage bzw. Soll-Orientierung frühzeitig zu ermitteln. Dies wirkt sich positiv auf die Lebensdauer der Turbinenschaufeln aus. Wenn drei zueinander nicht parallele ebene Abtastflächen vorhanden sind, lassen sich Lage und Orientierung des Gusskerns, mit dem die Abtastflächen geformt wurden, in allen drei translatorischen und allen drei rotatorischen Freiheitsgraden ermitteln.

Gemäß eines dritten Aspekts der vorliegenden Erfindung wird eine Turbinenschaufel mit einer in einem Koordinatensystem definierten Schaufelgeometrie und wenigstens einem nach außen offenen, eine Schaufelinnenfläche aufweisenden Hohlraum zur Verfügung gestellt. In der Schaufelinnenfläche der Turbinenschaufel ist wenigstens eine ebene Abtastfläche für eine Koordinatenmesseinrichtung ausgebildet, welcher eine definierte Soll-Lage und eine definierte Soll-Orientierung in Bezug auf ein Koordinatensystem, in dem die Schaufelgeometrie definiert ist, zugeordnet ist. Die erfindungsgemäße Turbinenschaufel kann insbesondere mit dem erfindungsgemäßen Verfahren zum Herstellen von Turbinenschaufeln hergestellt werden. Die mit Bezug auf das Herstellungsverfahren erläuterten Eigenschaften und Vorteile sind daher in der erfindungsgemäßen Turbinenschaufel verwirklicht. Außerdem kann die erfindungsgemäße Turbinenschaufel im erfindungsgemäßen Verfahren zum Ermitteln der Lage eines beim Gießen der Turbinenschaufel verwendeten Gusskerns nach dem Gießen der Turbinenschaufel Verwendung finden. Dabei ist es vorteilhaft, wenn sich die ebene Abtastfläche derart in oder in der Nähe einer in einer Außenfläche der Turbinenschaufel vorhandenen Öffnung des nach außen offenen Hohlraums befindet, dass sie von Außerhalb der Turbinenschaufel für einen Messkopf einer Koordinatenmesseinrichtung leicht zugänglich ist.

In der erfindungsgemäßen Turbinenschaufel kann die Schaufelinnenfläche wenigstens eine ebene Abtastfläche aufweisen, deren Flächennormale in der Radialrichtung der Turbinenschaufel oder entgegen der Radialrichtung der Turbinenschaufel verläuft. Zusätzlich oder alternativ kann die Schaufelinnenfläche wenigstens eine ebene Abtastfläche aufweisen, deren Flächennormale in der Axialrichtung der Turbinenschaufel oder entgegen der Axialrichtung der Turbinenschaufel verläuft. Weiter zusätzlich oder alternativ kann die Schaufelinnenfläche wenigstens eine ebene Abtastfläche aufweisen, deren Flächennormale in der Umfangsrichtung der Turbinenschaufel oder entgegen der Umfangsrichtung der Turbinenschaufel verläuft. Wenn sowohl eine ebene Abtastfläche, deren Flächennormale in der Radialrichtung oder entgegen der Radialrichtung verläuft, eine ebene Abtastfläche, deren Flächennormale in Axialrichtung oder entgegen Axialrichtung der Turbinenschaufel verläuft und eine ebene Abtastfläche, deren Flächennormale in Umfangsrichtung der Turbinenschaufel oder entgegen der Umfangrichtung der Turbinenschaufel verläuft, vorhanden sind, ist eine genaue Ermittlung der Lage und/oder der Orientierung des Gusskerns bezogen auf das Koordinatensystem, in dem die Schaufelgeometrie definiert ist, in allen translatorischen und rotatorischen Freiheitsgraden möglich. Wenn jedoch lediglich die Lage und die Orientierung des Gusskerns in Radialrichtung oder in Axialrichtung oder in Umfangsrichtung benötigt wird, reicht es aus, eine ebene Abtastfläche vorzusehen, deren Flächennormale in Radialrichtung oder entgegen der Radialrichtung der Turbinenschaufel verläuft bzw. eine Abtastfläche vorzusehen, deren Flächennormale in der Axialrichtung oder entgegen der Axialrichtung der Turbinenschaufel verläuft bzw. eine Abtastfläche vorzusehen, deren Flächennormale in der Umfangsrichtung oder entgegen der Umfangsrichtung der Turbinenschaufel verläuft. Dadurch, dass die Abtastfläche eine ebene Fläche ist, kann durch Abtasten wenigstens dreier Punkte der Abtastfläche nicht nur eine Verschiebung der Soll-Lage in oder entgegen der jeweiligen normalen Richtung detektiert werden, sondern auch eine Drehung der Orientierung der normalen Richtung in Bezug auf die Soll-Orientierung.

Typischerweise ist die radiale Kernlage während des Gießens der Turbinenschaufel von besonderem Interesse. Wenn der nach außen offene Hohlraum entgegen der Radialrichtung der Turbinenschaufel offen ist, kann die ebene Abtastfläche insbesondere eine entgegen der Radialrichtung der Turbinenschaufel verlaufene Flächennormale aufweisen. Dies kann beispielsweise realisiert sein, wenn die Turbinenschaufel eine Laufschaufel ist, die im Schaufelfuß eine oder mehrere Kühlluftöffnungen zur Zufuhr von Kühlluft in die Laufschaufel aufweist. Aber auch bei Leitschaufeln von Gasturbinen können Hohlräume vorhanden sein, die entgegen der Radialrichtung der Turbinenschaufel offen sind und beispielsweise zur Zu- oder Abfuhr von Kühlluft dienen. Wenn der nach außen offene Hohlraum dagegen in der Radialrichtung offen ist, kann die wenigstens eine ebene Abtastfläche insbesondere eine in der Radialrichtung der Turbinenschaufel verlaufende Flächennormale aufweisen. Diese Variante ist insbesondere von Bedeutung, wenn die Kernlage von Gusskernen zum Herstellen einer Krone an der Schaufelspitze einer Laufschaufel einer Gasturbine ermittelt werden soll. Aber auch bei Leitschaufeln von Gasturbinen sind häufig Hohlräume vorhanden, die in Radialrichtung der Turbinenschaufel offen sind. Diese können beispielsweise zur Zu-oder Abfuhr von Kühlluft dienen. Auch in diesem Fall ist eine Abtastfläche mit einer in Radialrichtung der Leitschaufel verlaufenden Flächennormalen vorteilhaft.

Außerdem wird eine Gasturbine mit einer erfindungsgemäßen Turbinenschaufel zur Verfügung gestellt.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt als Ausführungsbeispiel für eine erfindungsgemäße Turbinenschaufel eine erfindungsgemäß ausgebildete Laufschaufel einer Gasturbine.
- Figur 2: zeigt schematisch einen ersten Gusskern für die Herstellung der in Figur 1 gezeigten Turbinenschaufel.
- Figur 3: zeigt schematisch einen Ausschnitt eines zweiten Gusskerns für die Herstellung der Turbinenschaufel aus Figur 1.

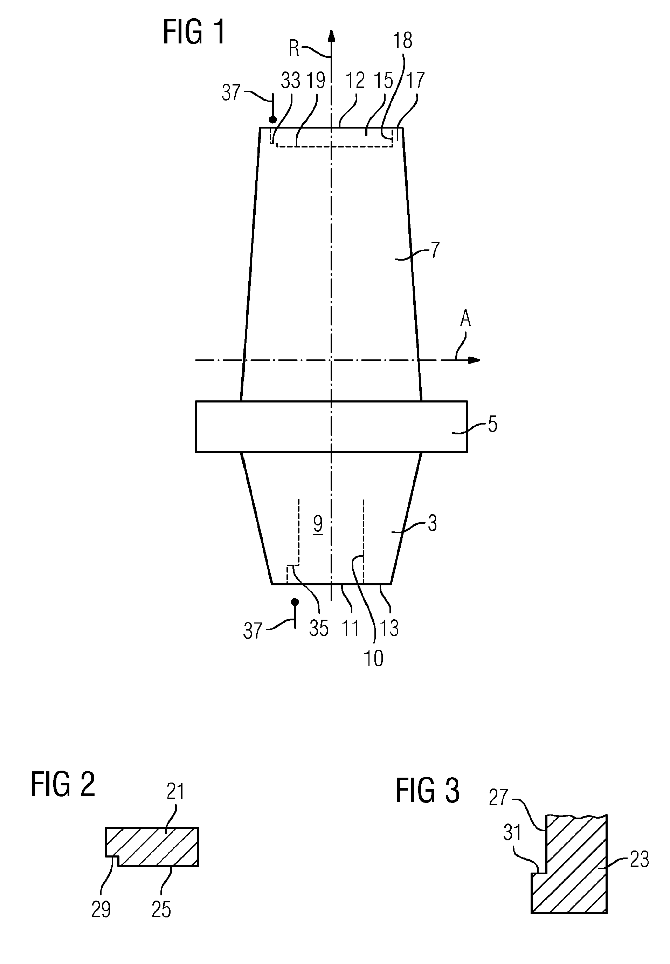

Ein Ausführungsbeispiel für die Erfindung wird nachfolgend anhand von Figur 1 beschrieben. Die Figur zeigt eine erfindungsgemäß ausgebildete Turbinenschaufel 1, die im vorliegenden Ausführungsbeispiel aus Laufschaufel einer Gasturbine ausgebildet ist. Die gezeigte Turbinenschaufel 1 umfasst einen Schaufelfuß 3, eine Schaufelplattform 5 und ein Schaufelblatt 7, wobei sich der Schaufelfuß 3 und das Schaufelblatt 7 von entgegengesetzten Seiten der Schaufelplattform aus im Wesentlichen in entgegengesetzte Richtungen erstrecken. Die Turbinenschaufel 1 weist eine Radialrichtung R auf, welche der Radialrichtung der Turbine entspricht, wenn die Turbinenschaufel 1 in eine Turbine eingebaut ist. Darüber hinaus weist die Turbinenschaufel 1 eine Axialrichtung A, welche der Axialrichtung der Turbine entspricht, wenn die Turbinenschaufel 1 in eine Turbine eingebaut ist, und eine Umfangsrichtung, die senkrecht zur Radialrichtung R und senkrecht zur Axialrichtung A verläuft und die einer Tangente der Umfangsrichtung am Ort der Turbinenschaufel entspricht, wenn die Turbinenschaufel in eine Turbine eingebaut ist, auf.

Die Turbinenschaufel 1 umfasst im vorliegenden Ausführungsbeispiel zwei Hohlräume, die nach außen hin offen sind, d.h. durch Öffnungen 11, 12 in der Außenfläche der Turbinenschaufel 1 zugänglich sind. Der erste dieser Hohlräume ist der im Bereich des Schaufelfußes 3 teilweise gestrichelt dargestellte Hohlraum 9, der sich durch den Schaufelfuß 3, die Schaufelplattform 5 und das Schaufelblatt 7 erstreckt und durch den beim Betrieb der Turbine, in die die Turbinenschaufel 1 eingebaut ist, Kühlluft zum Kühlen der Turbinenschaufel 1 geleitet wird. Die Kühlluft kühlt die Schaufel und kann beispielsweise durch Kühlluftöffnungen hauptsächlich im Bereich des Schaufelblattes 7 (nicht dargestellt) aus der Turbinenschaufel 1 wieder austreten, bspw. um einen Kühlluftfilm über Oberflächenbereiche der Turbinenschaufel zu bilden.

Der zweite Hohlraum ist in der Schaufelspitze durch eine Vertiefung 15 gebildet, die von einer über den Boden der Vertiefung 15 vorstehenden Wand 17 begrenzt ist. Die Vertiefung 15 bildet zusammen mit der Wand 17 eine sogenannte Krone der Turbinenschaufel 1 und weist eine Öffnung 12 in Radialrichtung R der Turbinenschaufel 1 auf.

Das Herstellen der Turbinenschaufel 1 erfolgt durch ein Gussverfahren, in dem eine Gießform mit zwei Gusskernen Verwendung findet. Die Gusskerne weisen dabei jeweils eine Gusskernaußenfläche auf, die eine komplementäre Form der Innenfläche des zu bildenden Hohlraums darstellt. Beim Gießprozess werden die Gusskerne in die die Formschalen für die Schaufelaußenfläche eingelegt und bilden die Form für die Schaufelinnenflächen, also die Innenflächen des Hohlraums 9, die Bodenfläche 19 und die Innenflächen der Kronenwände 17. Die Gusskerne 21 und 23 sind schematisch in den Figuren 2 und 3 dargestellt, wobei Figur 2 den Gusskern 21 für die Vertiefung 15 zeigt und Figur 3 einen Ausschnitt des Gusskerns 23 für den Kühlluftkanal 9 zeigt. Die Gusskernaußenflächen 25, 27 formen beim Gießen der Turbinenschaufel 1 die Bodenfläche 18 der Vertiefung der Kronenwände 17 bzw. die Innenfläche 10 des Kühlluftkanals 9.

Die in Figur 2 und Figur 3 dargestellten Gusskerne 21, 23 weisen jeweils eine ebene Referenzfläche 29, 31 auf, wobei im vorliegenden Ausführungsbeispiel die ebene Referenzfläche 29 des Gusskerns 21 für die Vertiefung 15 eine Flächennormale aufweist, die entgegen der Radialrichtung R der Turbinenschaufel 1 ausgerichtet ist, wenn der Gusskern in die Gießform für die Turbinenschaufel 1 eingesetzt ist. Der Gusskern 23 für den Kühlluftkanal 9 weist ebenfalls eine ebene Referenzfläche 31 auf. Im Unterschied zur ebenen Referenzfläche 29 des Gusskerns 21 ist die ebene Referenzfläche 31 des Gusskerns 32 jedoch so orientiert, dass ihre Flächennormale in Radialrichtung R der Turbinenschaufel 1 zeigt, wenn der Gusskern in die Gießform für die Turbinenschaufel 1 eingesetzt ist.

Zum Gießen der Turbinenschaufel 1 werden die Gusskerne 21, 23 in die Form für die Turbinenschaufel 1 integriert, und anschließend wird eine flüssige Superlegierung, typischerweise eine Superlegierung auf Nickel-, Kobalt- oder Eisenbasis, in die Form eingefüllt. Nach dem Erstarren der Superlegierung wird die Form von der Turbinenschaufel abgenommen und anschließend die Gusskerne 21, 23 thermisch oder chemisch aus der Vertiefung 15 bzw. dem Kühlluftkanal 9 entfernt, so dass die Innenflächen der Hohlräume 9, 15, also die Innenfläche 10 des Kühlluftkanals 9 sowie die Bodenfläche 19 und die inneren Wandflächen 16 der Kronenwände 17, freigelegt werden.

Wie bereits erwähnt, weisen die Gusskerne 21, 23 ebene Referenzflächen 29, 31 auf, deren Flächennormalen mit Bezug auf das Koordinatensystem, in dem die Schaufelgeometrie definiert ist, definierte Orientierungen aufweisen, wenn sich die Gusskerne 21, 23 in den Hohlräumen der Turbinenschaufeln 1 befinden. Da die Gussaußenflächen 25, 27 zu den Schaufelinnenflächen komplementäre Flächen sind, weisen die mit dem Gusskernen 21, 23 geformten Schaufelinnenflächen ebenfalls ebene Flächen mit definierter Orientierung der Flächennormalen auf. Im Falle des Gusskerns 21 für die Vertiefung 15 in der Schaufelspitze formt die Referenzfläche 29 eine ebene Fläche 33, deren Flächennormale parallel zur Radialrichtung R der Turbinenschaufel ausgerichtet ist. Die ebene Referenzfläche 31 des Gusskerns 23 formt in der Nähe der Öffnung 11 in der Unterseite 13 des Schaufelfußes 3 eine ebene Fläche 35, deren Flächennormale antiparallel zur Radialrichtung R der Turbinenschaufel ausgerichtet ist. Diese beiden ebenen Flächen, d.h. die ebene Fläche 33 in der Vertiefung 15 und die ebene Fläche 35 im Bereich der Öffnung 11 an der Unterseite 13 des Schaufelfußes 3, stellen leicht zugängliche ebene Abtastflächen für die Abtastung mit dem Messkopf 37 einer Koordinatenmesseinrichtung dar.

Wenn die Gusskerne 21, 23 korrekt in der Gießform für das Gießen der Turbinenschaufel 1 eingesetzt sind, ist die Flächennormale 33 also parallel zur Radialrichtung ausgerichtet und die Flächennormale der ebenen Abtastfläche 35 entgegen der Radialrichtung. Außerdem weisen beide Abtastflächen eine definierte radiale Lage auf. Wenn dagegen Abweichungen der Gusskerne 21, 23 von ihrer Soll-Lage und/oder der Soll-Orientierung in der Gießform zum Gießen der Turbinenschaufel 1 auftreten, spiegelt sich dies in der radialen Lage und/oder der Orientierung der ebenen Abtastflächen 33, 35 in der Vertiefung 15 bzw. im Kühlluftkanal 9 in Bezug auf die Schaufelgeometrie wieder. Mit der Koordinatenmesseinrichtung kann bzw. können die Lage und/oder die Orientierung der jeweiligen ebenen Abtastflächen in Bezug auf die Schaufelgeometrie ermittelt werden. Da die ebenen Abtastflächen 33, 35 zu den ebenen Referenzflächen 29, 31 der Gusskerne 21, 23 komplementäre Flächen darstellen, können aus der mit dem Messkopf 37 abgetasteten Lage und Orientierung der ebenen Abtastflächen 33, 35 die Lage und Orientierung der Gusskerne 21, 23 während des Gießprozesses ermittelt werden.

Falls beim Gießprozess Abweichungen der Lage und/oder der Orientierung der Gusskerne 21,23 von ihrer Soll-Lage bzw. Soll-Orientierung aufgetreten sind, kann dies also an der fertigen Turbinenschaufel festgestellt werden. Da das Feststellen der Lage und/oder der Orientierung der Gusskerne beim Gießen der Turbinenschaufel 1 an der fertigen Turbinenschaufel 1 zerstörungsfrei ermittelt werden kann, kann eine hohe Zahl von Turbinenschaufeln während einer Serienfertigung stichprobenartig untersucht werden, so dass Überprüfungen von Turbinenschaufeln in zeitlich kurzen Abständen realisierbar sind. Auf diese Weise können während der Serienfertigung auftretende Veränderungen in der Lage und/oder der Orientierung der Gusskerne 21, 23 frühzeitig festgestellt werden, was eine zeitnahe Korrektur der Lage und/oder Orientierung der Gusskerne für die nachfolgenden Gießprozesse der Serienfertigung ermöglicht. Auftretende Abweichungen in Lage und/oder Orientierung der Gusskerne 21, 23 können dadurch korrigiert werden, bevor sie ein vorgegebenes Maß überschreiten, wodurch sich die Qualität der in Serie gefertigten Turbinenschaufeln insbesondere im Hinblick auf ihre Wandabmessungen sowie im Hinblick auf ihre thermodynamischen Übergangszonen verbessern lassen. Besonders kritische Wandabmessungen sind dabei die Wanddicken im Bereich des Schaufelblattes bzw. die Wanddicke im Bereich der Bodenfläche 19 der Vertiefung 15, die auch Kronenbodenhöhe genannt wird.

Obwohl im vorliegenden Ausführungsbeispiel die Referenzflächen der Gusskerne 21, 23 Flächennormalen mit einer Orientierung aufweisen, die parallel bzw. antiparallel zur Radialrichtung verläuft, können die Gusskerne 21, 23 zusätzlich oder alternativ auch Referenzflächen aufweisen, deren Flächennormale parallel oder antiparallel zur Axialrichtung A der Turbinenschaufel 1 verlaufen. Die mit derartigen ebenen Referenzflächen geformten ebenen Abtastflächen weisen dann Flächennormalen auf, die bei korrekter Lage und Orientierung der Gusskerne 21, 23 antiparallel bzw. parallel zur Axialrichtung verlaufen. Ebenso besteht die Möglichkeit zusätzlich oder alternativ in den Gusskernen 21, 23 ebene Referenzflächen vorzusehen, deren Flächennormale parallel oder antiparallel zur Umfangsrichtung der Turbinenschaufel 1 verlaufen. Die damit geformten ebenen Abtastflächen in den Innenflächen der Turbinenschaufel weisen dann Flächennormalen auf, die antiparallel bzw. parallel zur Umfangsrichtung der Turbinenschaufel 1 verlaufen.

Die vorliegende Erfindung wurde anhand von Ausführungsbeispielen zu Erläuterungszwecken ausführlich beschrieben. Ein Fachmann erkennt jedoch, dass Abweichungen von den beschriebenen Ausführungsformen möglich sind. So ist es z.B. möglich, dass die Flächennormale einer Referenzfläche eines Gusskerns eine andere Orientierung als die im Rahmen des Ausführungsbeispiels genannten Orientierungen aufweist. Die genannten Orientierungen sind jedoch im Hinblick auf das Koordinatensystem, in dem die Schaufelgeometrie der Turbinenschaufel 1 definiert ist, vorteilhaft. Ebenso kann die Erfindung auch im Rahmen von anderen Turbinenschaufeln als der dargestellten Laufschaufel einer Gasturbine Verwendung finden. beispielsweise weisen Leitschaufeln von Gasturbinen typischerweise wenigstens einen Hohlraum mit zwei Öffnungen auf, die sich an radial entgegengesetzten Enden der Leitschaufel im Bereich der Kopfblätter der Leitschaufeln befinden. Diese Öffnungen dienen in der Regel als Eintritts- und Austrittsöffnungen für Kühlluft zum Kühlen der Leitschaufeln. Im Bereich der Eintrittsöffnung und/oder im Bereich der Austrittöffnung können mittels einer oder mehrerer ebenen Referenzflächen ebene Abtastflächen zum Ermitteln der Lage und Orientierung des Gusskerns oder bei Verwendung mehrerer Gusskerne der Gusskerne geformt werden. Weiterhin besteht grundsätzlich die Möglichkeit, bei Turbinenschaufeln mit hinterschnittener Abströmkante die für das Ausformen der Hinterschneidung verwendeten Gusskerne so auszugestalten, dass im Bereich der Hinterschneidung ebene Abtastflächen gebildet werden. Die vorliegende Erfindung soll daher nicht auf spezielle Merkmalskombinationen des Ausführungsbeispiels beschränkt sein, sondern lediglich durch die beigefügten Ansprüche.

## Patentansprüche

1. Verfahren zum Herstellen von Turbinenschaufeln (1) mit einer in einem Koordinatensystem definierten Schaufelgeometrie und wenigstens einem nach außen offenen, eine Schaufelinnenfläche (10, 18, 19) aufweisenden Hohlraum (9, 15), in dem die Turbinenschaufeln (1) gegossen werden,
wobei der wenigstens eine nach außen offene Hohlraum (9, 15) mittels wenigstens eines Gusskerns (21, 23) geformt wird, der eine die Schaufelinnenfläche (10, 18, 19) formende Gusskernaußenfläche (25, 27) aufweist und der nach dem Geißprozess aus dem Hohlraum (9, 15) entfernt wird, **dadurch gekennzeichnet, dass**
die Gusskernaußenfläche (25, 27) wenigstens eine ebene Referenzfläche (29, 31) mit definierter Soll-Lage und/oder definierter Soll-Orientierung in Bezug auf das Koordinatensystem, in dem die Schaufelgeometrie definiert ist, aufweist, welche in der Schaufelinnenfläche (10, 18, 19) wenigstens eine ebene Abtastfläche (33, 35) für den Messkopf (37) einer Koordinatenmesseinrichtung formt.

2. Verfahren nach Anspruch 1,
**dadurch gekennzeichnet, dass**
der nach außen offene Hohlraum (9, 15) wenigstens eine Öffnung (11, 12) in einer Außenfläche der Turbinenschaufel (1) aufweist, der wenigstens eine Gusskern (21, 23) einen die wenigstens eine Öffnung (11 ,12) formenden Gusskernabschnitt aufweist und die wenigstens ebene Referenzfläche (29, 31) derart im oder in der Nähe des die Öffnung (11, 12) formenden Gusskernabschnitts gebildet ist, dass die durch die wenigstens eine ebene Referenzfläche (29, 31) in der Schaufelinnenfläche (10, 18, 19) geformte wenigstens eine ebene Abtastfläche (33, 35) von außerhalb der Turbinenschaufel (1) für einen Messkopf (37) einer Koordinatenmesseinrichtung leicht zugänglich ist.

3. Verfahren nach Anspruch 1 oder Anspruch 2,
**dadurch gekennzeichnet, dass**
- der wenigstens eine Gusskern (21, 23) ein ebene Referenzfläche (29, 31) mit einer in der Radialrichtung (R) der herzustellenden Turbinenschaufel (1) oder einer entgegen der Radialrichtung (R) der herzustellenden Turbinenschaufel (1) verlaufenden Flächennormalen aufweist und/oder
- der wenigstens eine Gusskern (21, 23) ein ebene Referenzfläche mit einer in der Axialrichtung (A) der herzustellenden Turbinenschaufel (1) oder entgegen der Axialrichtung (A) der herzustellenden Turbinenschaufel (1) verlaufenden Flächennormalen aufweist und/oder
- der wenigstens eine Gusskern (21, 23) ein ebene Referenzfläche mit einer in der Umfangsrichtung der herzustellenden Turbinenschaufel (1) oder entgegen der Umfangsrichtung der herzustellenden Turbinenschaufel (1) verlaufenden Flächennormalen aufweist.

4. Verfahren nach Anspruch 3,
**dadurch gekennzeichnet, dass**
der wenigstens eine Gusskern (23) zum Formen eines entgegen der Radialrichtung (R) der herzustellenden Turbinenschaufel (1) offenen Hohlraums (9) dient und der wenigstens eine Gusskern (23) eine ebene Referenzfläche (31) mit einer in der Radialrichtung (R) der herzustellenden Turbinenschaufel verlaufenden Flächennormalen aufweist.

5. Verfahren nach Anspruch 3 oder Anspruch 4,
**dadurch gekennzeichnet, dass**
der wenigstens eine Gusskern (21) zum Formen eines in der Radialrichtung (R) der herzustellenden Turbinenschaufel (1) offenen Hohlraums (15) dient und der wenigstens eine Gusskern (21) eine ebene Referenzfläche (29) mit einer entgegen der Radialrichtung (R) der herzustellenden Turbinenschaufel (1) verlaufenden Flächennormalen aufweist.

6. Verfahren zum Ermitteln der Lage eines beim Gießen einer Turbinenschaufel (1) verwendeten Gusskerns (21, 23) nach dem Gießen der Turbinenschaufel (1),
**dadurch gekennzeichnet, dass**
in einer mit dem Verfahren nach einem der vorangehenden Ansprüche hergestellten Turbinenschaufel (1) die wenigstens eine ebene Abtastfläche (33, 35) in der Schaufelinnenfläche (10, 18, 19) mit dem Messkopf (37) einer Koordinatenmessung abgetastet wird, um die Lage und/oder die Orientierung der wenigstens einen ebenen Abtastfläche (33, 35) in Bezug auf die Schaufelgeometrie zu ermitteln, und aus ermittelten Lage und/oder Orientierung der wenigstens einen ebenen Abtastfläche (33, 35) die Lage und/oder Orientierung des beim Gießen der Turbinenschaufel verwendeten Gusskerns (21, 23) ermittelt wird.

7. Turbinenschaufel (1) mit einer in einem Koordinatensystem definierten Schaufelgeometrie und wenigstens einem nach außen offenen, eine Schaufelinnenfläche (10, 18, 19) aufweisenden Hohlraum (9, 15),
wobei in der Schaufelinnenfläche (10, 18, 19) wenigstens eine ebene Abtastfläche (33, 35) für den Messkopf (37) einer Koordinatenmesseinrichtung ausgebildet ist,
wobei der wenigstens einen ebenen Abtastfläche (33, 35) eine definierte Soll-Lage und/oder eine definierte Soll-Orientierung in Bezug auf das Koordinatensystem, in dem die Schaufelgeometrie definiert ist, zugeordnet ist.

8. Turbinenschaufel (1) nach Anspruch 7,
**dadurch gekennzeichnet, dass**
der nach außen offene Hohlraum (9, 15) wenigstens eine Öffnung (11, 12) in einer Außenfläche der Turbinenschaufel (1) aufweist und sich die ebene Abtastfläche (33, 35) derart in oder in der Nähe der Öffnung (11, 12) befindet, dass sie von außerhalb der Turbinenschaufel (1) für einen Messkopf (37) einer Koordinatenmesseinrichtung leicht zugänglich ist.

9. Turbinenschaufel (1) nach Anspruch 7 oder Anspruch 8,
**dadurch gekennzeichnet, dass**
- die Schaufelinnenfläche (10, 18, 19) wenigstens eine ebene Abtastfläche (33, 35) aufweist, deren Flächennormale in der Radialrichtung (R) der Turbinenschaufel (1) oder entgegen der Radialrichtung (R) der Turbinenschaufel (1) verläuft und/oder
- die Schaufelinnenfläche (10, 18, 19) wenigstens eine ebene Abtastfläche aufweist, deren Flächennormale in der Axialrichtung (A) der Turbinenschaufel (1) oder entgegen der Axialrichtung (A) der Turbinenschaufel (1) verläuft und/oder
- die Schaufelinnenfläche (10, 18, 19) wenigstens eine ebene Abtastfläche aufweist, deren Flächennormale in der Umfangsrichtung der Turbinenschaufel (1) oder entgegen der Umfangsrichtung der Turbinenschaufel (1) verläuft.

10. Turbinenschaufel (1) nach Anspruch 9,
**dadurch gekennzeichnet, dass**
der nach außen offene Hohlraum (9) entgegen der Radialrichtung (R) der Turbinenschaufel (1) offen ist und die wenigstens eine ebene Abtastfläche (35) eine entgegen der Radialrichtung (R) der Turbinenschaufel (1) verlaufenden Flächennormale aufweist.

11. Turbinenschaufel (1) nach Anspruch 9 oder Anspruch 10,
**dadurch gekennzeichnet, dass**
der nach außen offene Hohlraum (15) in der Radialrichtung (R) der Turbinenschaufel (1) offen ist und die wenigstens eine ebene Abtastfläche (33) eine in der Radialrichtung (R) der Turbinenschaufel (1) verlaufenden Flächennormale aufweist.

12. Gasturbine mit einer Turbinenschaufel nach einem der Ansprüche 7 bis 11.
